# EUROPEAN PATENT APPLICATION

(11) **EP 1 073 264 A1**
(43) Date of publication of application: **31.01.2001**
(21) Application number: 00306446.6
(22) Date of filing: 28.07.2000
(51) Int. Cl.: H04N 5/00

(54) **Method and apparatus for controlling program selection in a digital television receiver**

(30) Priority: 28.07.1999 US 146070 P
(71) Applicant: Sarnoff Corporation, Princeton, NJ 08543-5300 (US)
(72) Inventor: Fedele, Nicola John, Kingston, NJ 08528 (US); Acampora, Alfonse Anthony, Staten Island, NY 10314 (US); Ihrie, David Wayne, Princeton Junction, NJ 08550 (US)
(74) Representative: Pratt, Richard Wilson

(57) **Abstract**

A method and apparatus (400) for controlling program selection in a multiple program per channel transport stream. Specifically, a remapping function is implemented where program allocation table (PAT) is remapped to a user viewer table.

## Description

This application claims the benefit of U.S. Provisional Application No. 60/146,070 filed on July 28, 1999, which is herein incorporated by reference.

The invention relates to a method and apparatus for receiving programs in a transport stream. Specifically, the present invention describes an apparatus and method for controlling program selection in a multiple program per channel transport stream, e.g., an Advanced Television System Committee (ATSC) transport stream.

### BACKGROUND OF THE DISCLOSURE

With the ever-increasing proliferation of digital information, the concept of broadcasting digital information has gained wide acceptance. This transformation has presented both opportunities and challenges in broadcasting information in digital format.

Specifically, many television studios and stations are proceeding toward the goal of broadcasting many programs via digital television signals. Standards such as the Advanced Television System Committee (ATSC) and the Moving Picture Experts Group (MPEG) are examples of standards that have contributed greatly toward this goal. A unique aspect of transmitting programs in digital format is the ability to provide multiple programs per channel or frequency. Thus, by tuning to a particular frequency, a receiver may in fact be receiving multiple programs instead of just one program. In order to differentiate different programs on one channel, a broadcaster often provides a service announcement guide, e.g., an Electronic Program Guide (EPG), that provides information to a receiver for identifying different programs within the transport stream. The receiver will then provide an orderly guide to a viewer, e.g., programs 1-10 in the transport stream can be presented to a viewer as channels 2-11, respectively.

If the broadcaster is the only broadcasting source or point in an area, e.g., a cable company, then the transmitted service announcement guide, e.g., EPG, from the cable company will be a complete Electronic Program Guide. However, if a user is within an area where multiple broadcasting sources are available (e.g., a cable company and a terrestrial broadcaster), and a single receiver is tasked with interfacing with all the broadcasting sources, then from the perspective of the receiver, each broadcasting source is only providing a partial EPG. This creates a unique problem for such a receiver. Specifically, an assignment of a program for "channel 2" for one broadcaster may be completely different for a different broadcaster. Such conflicting assignments between different broadcasters will create conflicts for the receiver.

Additionally, as the number of available broadcasting sources increases in an area, the management by users of a large number of available programs becomes unwieldy. For example, a viewer must often refer to a long chart that cross references a program with a channel number, e.g., Home Box Office (HBO) may be on "channel 60" while CNN may be on "channel 18". A viewer who favors these two channels must then remember the channel numbers or must traverse many channels to scroll through his or her favorite subset of channels. If multiple broadcasting sources are made available simultaneously to a single receiver, then the total number of available channels may be on the order of hundreds of channels.

Therefore, there is a need in the art for an apparatus and method for controlling program selection in a multiple program per channel transport stream.

### SUMMARY OF THE INVENTION

An embodiment of the present invention is a method and apparatus for controlling program selection in a multiple program per channel transport stream. Specifically, a remapping function is implemented where program allocation table (PAT) is remapped to a user viewer table.

The unique mapping method achieves at least three broad functions of the present invention. First, the present invention combines partial service announcement guides, e.g., program guides from multiple independent frequencies or channels to construct a single integrated service announcement guide (program guide). Second, a viewer is provided with a "user view table" to translate viewer interactions via remote control units into selections of frequency and PIDs for controlling the tuner and PID selection functions in the receiver. Finally, independent control of tuner and PID selection functions by a receiver controller is made available.

### BRIEF DESCRIPTION OF THE DRAWINGS

The teachings of the present invention can be readily understood by considering the following detailed description in conjunction with the accompanying drawings, in which:
FIG. 1 illustrates a block diagram of a simplified MPEG packet stream system of the present invention;
FIG. 2 illustrates a block diagram of an encoding system of the present invention;
FIG. 3 illustrates a block diagram of a receiver system of the present invention;
FIG. 4 illustrates a more detailed block diagram of a receiver system of the present invention; and
FIG. 5 a receiver system of the present invention.

To facilitate understanding, identical reference numerals have been used, where possible, to designate identical elements that are common to the figures.

### DETAILED DESCRIPTION

The present invention relates to a receiver system or a decoding system. To better understand the present invention, a broad description of an encoding system or a transmission system is also provided to assist in the understanding of the operations performed by the present novel receiver system. Additionally, such top level description will also provide insights as to the different applications of the present receiver system, e.g., using the present receiver system for providing programs to a television or to a host, e.g., a personal computer (PC).

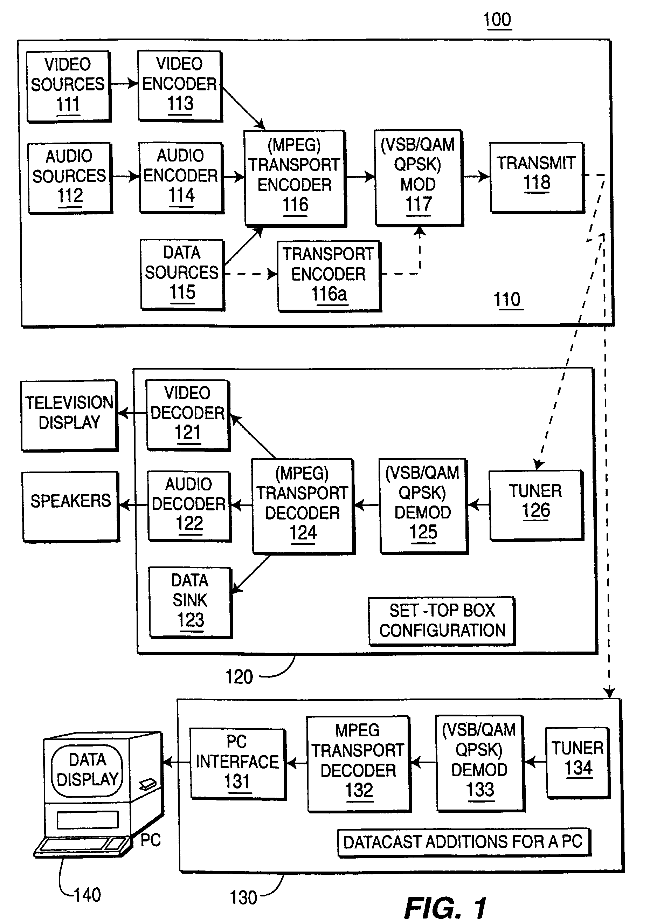

FIG. 1 depicts a block diagram of a simplified structure of a packet stream system 100 of the present invention. The packet stream system 100 is broadly illustrated as comprising an encoding system 110 (or broadly defined as a digital data transmitting system), a first decoding system 120 (or broadly defined as a receiver system) and a second decoding system 130. The first decoding system 120 is illustrated as a set-top box configuration, whereas the second decoding system 130 is illustrated as an add-on board or an external module to a personal computer (PC). It should be noted that two decoding systems are shown in FIG. 1 for illustrating two different configurations of decoding systems and therefore should not be interpreted as requiring two decoding systems for proper operation. Additionally, a single decoding system may optionally include both video/audio and data decoding, thereby providing the capability to display to either a television or a PC.

Transport stream as defined in accordance with the MPEG standards is used in the packet stream system illustrated in FIG. 1. Although the present invention is described below using the MPEG transport stream as an example, those skilled in the art will realize that the present invention can be applied to any other packet streams in accordance with other formats. Furthermore, although the present invention is described below using the term "stream", it should be understood that the various operations described below may be performed on the entire stream or portion thereof.

Encoding system 110 includes a video encoder 113, an audio encoder 114, a transport encoder 116, e.g., an MPEG transport encoder, a modulator 117 and a transmitter 118. In operation, video sources 111 are encoded into video elementary streams, whereas audio sources 112 are encoded into audio elementary streams. These video and elementary streams are then combined with data sources 115 (opportunistic data) in the transport encoder 116 to produce a transport stream. Alternatively, the video and audio can be combined to produce a transport stream via encoder 116, and then re-multiplexed with opportunistic data that are processed in an optional transport encoder 116a to form a combined transport stream.

It should be noted that "opportunistic data" is defined as data that is not related to data encompassed in the video and audio elementary streams of a primary service of the transport stream. Additionally, although opportunistic data is described as data that is transmitted as the opportunity exists for their transmission given the available bandwidth, it should be understood that for a particular application, a transmission system may reserve a minimum or a fixed bandwidth for their transmission. Namely, the opportunistic data may have a minimum throughput, but can achieve higher throughput as the conditions allow.

The modulator 117 will modulate the transport stream for transmission by the transmitter 118, e.g., vestigial side band (VSB) (broadcast), quadrature amplitude modulation (QAM) (cablecast), or quadrature phase-shift key (QPSK) (satellite) modulation. The method for combining the opportunistic data with the elementary video and audio streams will be further described below.

Decoding system 120 includes a video decoder 121, an audio decoder 122, a transport decoder 124, a data sink or storage 123, a demodulator 125 and a tuner 126. In operation, the tuner 126 will select the desired channel for receiving the transmitted signal that is then demodulated by the demodulator 125 to produce a transport stream. In turn, the transport decoder 124, e.g., an MPEG transport decoder, will decode the transport stream into video, audio and data (opportunistic data) streams which are then forwarded to video decoder 121, audio decoder 122 and data storage 123, respectively. The decoded video and audio signals are then forwarded to a display and speakers, respectively. The stored opportunistic data can be selectively recalled and displayed by the user. The method for extracting the opportunistic data from the transport stream will be further described below.

Decoding system 130 includes, a PC interface module 131, a transport decoder 132, a demodulator 133 and a tuner 134. In operation, the tuner 134 will select the desired channel for receiving the transmitted signal that is then demodulated by the demodulator 133 to produce a transport stream. In turn, the transport decoder 132, e.g., an MPEG transport decoder, will extract data streams (opportunistic data) from the transport stream which is then forwarded to PC interface module 131. The PC interface will format the decoded data streams for transfer to a PC 140. Since the decoded video and audio streams may not be relevant to the PC application, these video and audio streams can be discarded if the PC has no capability to exploit the information carried on these streams.

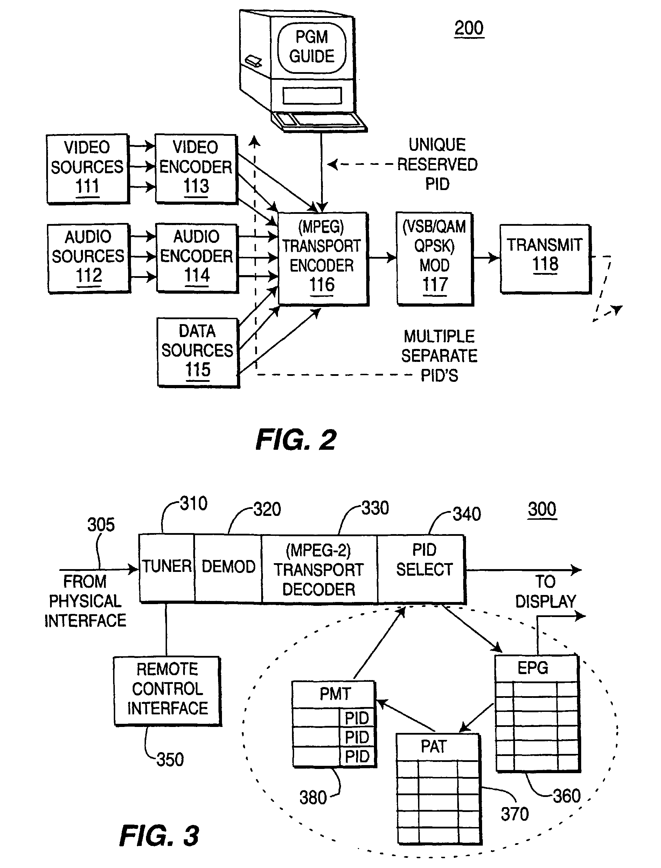

FIG. 2 illustrates a block diagram of an encoding system 200 of the present invention. FIG. 2 shows more details of the encoder system 110 of FIG. 1. Since the modules in FIG. 2 are the same as those in FIG. 1, same reference numerals have been used and the general description of the operation of each module is provided above.

However, in this embodiment, the video, audio, and data PES components are each assigned a separate 13 bit Packet Identification (PID) label by the transport stream encoder, denoted by 0xHHHH. Namely, each opportunistic data source will be assigned a different PID.

In general, an electronic program guide (PGM guide) is also sent in packets with a reserved PID 0x1FFD. The entries in the program guide are channel and event descriptors that point to entries in a Program Association Table (PAT, also a reserved PID 0x0000), which entries then indirectly point to entries in a Program Map Table (PMT) where the PID's for the selected video, and associated audio and data are listed. The program guide can also make use of the ATSC Program and System Information Protocol (PSIP) tables with the ATSC established "base PID" of 0x1FFB. Namely, the electronic program guide will allow the decoding system to quickly identify a packet as a video, audio or data packet.

The program specific information (PSI) pertaining to the opportunistic data can be extracted from the MPEG transport bitstream. Namely, the MPEG standards already support PSI which contains information about the program and its constituent elementary streams. By cleverly exploiting this general established protocol, the Electronic Program Guide (EPG), Program Map Tables (PMT) and the Program Association Tables (PAT) can be extracted and the opportunistic data can be easily displayed via the video graphics adapter (VGA) card in the computer. The information contained in the PSI will allow a menu to be formed from which the! user can select data streams for access (with appropriate password security, if so desired). The concept of inserting and extracting opportunistic data from a transport stream is disclosed in US patent application entitled "Method And Apparatus For Establishing A Datapipe In A Digital Transport Stream", filed on April 25, 2000 with serial number 09/559, 816, and attorney docket SAR 12649, which is commonly owned by the Assignee and herein incorporated by reference.

FIG. 3 illustrates a block diagram of a receiver system 300 of the present invention. The receiver 300 comprises a physical interface 305, a tuner 310, a demodulator 320, a transport decoder 330, a PID selector 340, and remote control interface 350.

The receiver 300 has a physical layer interface 305 that can interface with a variety of physical links, such as terrestrial, cable, external server (e.g., CD ROM), or satellite. These physical connections can be selected from application software residing in the computer controlling the receiver or a set top box. The selected physical layer from terrestrial or cable will be sent to the tuner 310 for appropriate channel selection. The tuner is agile and is controlled by application software in the remote control interface 350. The tuner IF output is sent to a data demodulator 320. In the case of Advanced Television Standards Committee (ATSC), a VSB Demodulator is used. Cable systems may use other forms of data demodulation, such as QAM or QPSK. The selection of data demodulation method can be selected by the application software.

The output of the demodulator 320 is the transport stream that is sent to the transport stream decoder (TSD) 330. The TSD demultiplexes the data packets from the aggregate bitstream by decoding the Program Identification (PID) in the Transport Stream headers. The recovered payloads in accordance with the PIDs selected or targeted by the PID selector 340 are sent to the display portions of the system.

A feature of the present system is that Program Specific Information (PSI), already existing in the multiplexed MPEG Transport bitstream, can be extracted. The Electronic Program Guide (EPG) 360, Program Map Tables (PMT) 380 and the Program Association Tables (PAT) 370 can be extracted and the data can be displayed for interaction by the viewer. This forms a menu from which the user can select desired programs for viewing as discussed in more detail below.

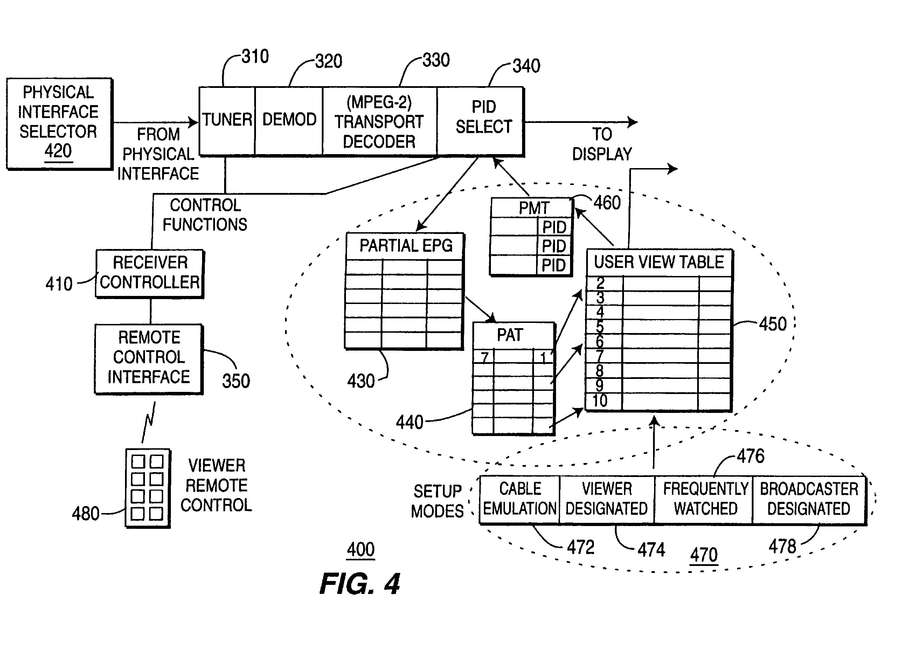

FIG. 4 illustrates a more detailed block diagram of a receiver system 400 of the present invention. The receiver system 400 is similar to that of FIG. 3 and common components share similar numeral references. However, FIG. 4 further illustrates a receiver controller 410 and a physical interface selector 420.

In operation, the viewer operates a remote control 480 that communicates with the remote control interface 350. For example, the viewer selecting a particular channel is picked up by an infrared receiver (not shown) of the remote control interface 350. In turn, the selected channel is passed to the receiver controller 410 for processing or implementation of various control functions.

To illustrate, if the viewer selects a particular sports channel, then the receiver controller 410 may have to select a particular broadcasting source if multiple broadcasting sources are available, via the physical interface selector 420. Namely, the physical interface selector 420 may select a broadcasting source such as cable, terrestrial broadcaster or a satellite broadcaster. Once a broadcasting source is selected, the tuner is set to a particular channel and a particular program (i.e., a particular PID) within the channel is made available to the viewer as the selected sports channel.

From a viewer's perspective, the interaction with the data stream for television viewing is through a typical television remote control unit, with functions specifying "go to the next higher channel (CH+)", "go to the next lower channel (CH-)", or "go to a specific selected channel number (CH#)". The method for translating these commands in the receiver so that the desired frequency/channel and program are displayed is the basis for the present invention.

A unique mapping method is described to achieve at least three broad functions of the present invention. First, the present invention combines partial program guides from multiple independent frequencies or channels to construct a single integrated program guide. Second, a viewer is provided with a "user view table" to translate viewer interactions via remote control units into selections of frequency and PIDs for controlling the tuner and PID selection functions in the receiver. Finally, independent control of tuner and PID selection functions by a receiver controller is made available.

In a multiple program per channel environment, a viewer selected change in the program to be viewed will result in changes in the selected PIDs (video, audio, data) from the transport stream, and may or may not require a change in the frequency or channel selected by the tuner. Additionally, viewers will want to control the correspondence between programs transmitted by multiple sources in an area, and the sequence or "channel numbers" apparent to the viewer by which those programs are selected.

Each broadcaster will transmit a program guide indicating the multiple programs in that broadcaster's digital channel or channels. Unlike current cable or satellite services however (where a single transmission source multiplexes all programs and produces the single integrated program guide for the entire service), broadcast of multiple programs per channel by terrestrial broadcasters, or a receiver that receives multiple services (e.g., terrestrial broadcast and cable in a single receiver) means that separate transmission sources will have only a partial program guide for the complete set of programs capable of being received. More specifically, the electronic program guide and associated tables found at the reserved PID addresses on one channel or transmission source will be different from those found on a second transmission source. The receiver must construct a single composite program guide from these partial sources to provide complete program access to the viewer.

The method for achieving this composite program guide, receiver control for selection of programs and viewer control over channel number correspondence to programs is illustrated in Figure 4. In Figure 4, the physical interface, tuner, and MPEG-2 transport stream decoder function are as described in FIG. 3 to extract the Electronic Program Guide and related tables from the transport stream.

In operation, a "partial EPG" 430 is extracted from the transport stream, which, in turn, provides the PAT 440. The PAT provides the initial information about which programs are transported in the current transport stream. For every program in the transport stream, the program association table contains an entry with a program number and a corresponding PID value. This PID value identifies those transport packets that carry another table, the program map table (PMT) 460. In turn, the PMT provides various fields, e.g., elementary_PID and stream_type. These fields contain the PID of those transport packets, carrying PES packets for a specific program and define the type of PES stream found in the transport packets identified by the elementary_PID field.

However, in the present invention, the PAT from each partial EPG (if multiple broadcasting sources rare available) is remapped to a different table, e.g., a user view table 450. Thus, a program that was initially assigned to a particular channel can be remapped to a different channel. To illustrate, a program that is transported in the transport stream as "channel 7" can be remapped as "channel 2" in the user view table 450. Thus, when the receiver controller 410 directs that the PIDs associated with "channel 2" be displayed, the receiver controller 410 will consult the user view table 450 instead of the PAT 440 from the partial EPG 430.

Using this intermediate remapping operation, a user can now call up via the remote control interface 350 and view the "user view table" 450 to modify the channel assignment. Namely, if the viewer favors HBO and CNN, then the viewer can select HBO as channel 2 and CNN as channel 3, regardless of their original channel assignment. This provides the unique function where a viewer is able to group a subset of favorite programs together, thereby avoiding the necessity to scroll through a large set of undesired channels.

Additionally, programs from different broadcasting sources or points can be remapped into a single composite EPG. The composite operation can be performed by the receiver controller based on a particular setup mode as discussed below or based upon some default criteria, e.g., cable programs are assigned first, followed by satellite broadcaster, followed by terrestrial broadcaster and so on.

Finally, independent control of tuner and PID selection functions by a receiver controller is made available. For example, using the user map table, the viewer can select a PID (a program) without changing the channel. One application is the ability to select and extract data from a particular multi-program channel. As discussed above, with the deployment of "data pipe" within a transport stream, a viewer can assign channels associated with different types of data streams within the data pipe. For example, a program may have associated data streams where, for example, a viewer can order and purchase an outfit wore by a character on a particular program. The merchandise data associated with the program may be assigned to a neighboring channel. In fact, the associated data streams may have further subdivision based on content, e.g., a data PID assigned to merchandises for men, another data PID assigned to merchandises for women, another data PID assigned to furniture on the set and so on. The viewer can selectively program any of these available data streams onto the user view table.

Finally, the user view table 450 can operate in several modes, "setup", "acquisition", and "operation". In the setup mode, the viewer can use preloaded mechanisms (e.g., "cable emulation", "viewer designated" "frequently watched" and "broadcaster designated") to establish the channel number to program correspondence. The "cable emulation" setup mode allows the user view table 450 to emulate the channel assignment as put forth by the cable company. The "viewer designated" setup mode allows a viewer to assign all channels in the user view table 450. The "frequently watched" setup mode allows statistical data to effect the assignment of channels in the user view table 450. The "broadcaster designated" setup mode allows the broadcaster to effect the assignment of channels in the user view table 450.

In the acquisition mode, the receiver extracts partial program guide information from a transmission source and loads it into the appropriate locations in the user view table 450. The acquisition mode may occur automatically when the receiver is turned on, without further viewer action.

In the operation mode, selections made manually or via the remote control unit are treated as selections in the user view table 450, which then interact with the controller to change the PIDs or frequency/PIDs combinations to display the selected programs. If a selection in the operation mode chooses a program where the PID information is unknown, the receiver automatically switches to the acquisition mode to read new program guide information for the selected transmission source.

As an example of the operation of this receiver system, consider a scenario where two broadcasters in an area (A and B), each broadcasting three programs on their single digital channel frequency. For this example, the programs are A1, A2, A3, and B1, B2, B3. The viewer selects "frequently watched" (i.e., viewing frequency) as the setup mode, with the viewer's most watched program, A3, designated as channel number 2, followed by programs A2, B3, B1, A1, and B2 as channel numbers 3 through 7 respectively in the user view table 450. When the receiver is turned on, it automatically scans the two frequencies, first acquiring the program guide for channel A, and then the program guide for channel B. The receiver constructs the complete user view table, combining the program guide information for both channels into the designated sequence selected by the viewer.

In operation, the viewer selects. CH#3 on the remote control, and the user view table determines that this represents program A2. The controller then switches the tuner to frequency "A" and the PIDs to the video, audio and data PIDs for program A2. Next the viewer pushes the "CH+" button on the remote control two times, stopping briefly to review the program each time. The first, "CH+" results in CH#4 in the user view table, representing program B3, and resulting in another change in both the frequency of the tuner and the PIDs selected for display. The second CH+" moves the viewer selection to CH#5 in the user view table, corresponding to program B1. Since this is a second program on the same frequency as the previous program (B3), the tuner frequency is not changed, but the PIDs selected are changed so that program B1 is displayed. In this manner, any number, combination or sequence of single or multiple programs per channel from any number of transmission sources in an area can be selected for display in a way that is favored and controlled by the viewer.

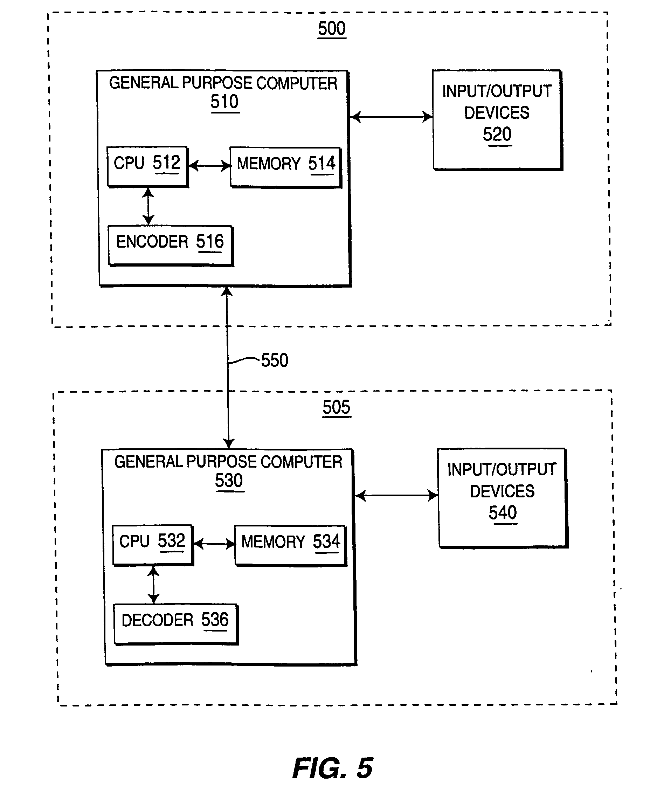

FIG. 5 illustrates an encoding system 500 and a decoding system 505 of the present invention. The encoding system 500 comprises a general purpose computer 510 and various input/output devices 520. The general purpose computer comprises a central processing unit (CPU) 512, a memory 514, an encoder 516 for receiving and encoding a sequence of images.

In the preferred embodiment, the encoder 516 is simply the video encoding system 110 as discussed above. The encoding system 110 can be physical devices that are coupled to the CPU 512 through communication channels. Alternatively, the encoding system 110 can be represented by a software application (or a combination of software and hardware, e.g., application specific integrated circuit (ASIC))which is loaded from a storage device, e.g., a magnetic or optical disk, and resides in the memory 512 of the computer. As such, the encoding system 510 of the present invention can be stored on a computer readable medium, including the bitstreams generated by this encoding system.

The computer 510 can be coupled to a plurality of input and output devices 520, such as a keyboard, a mouse, a camera, a camcorder, a video monitor, any number of imaging devices or storage devices, including but not limited to, a tape drive, a floppy drive, a hard disk drive or a compact disk drive. The input devices serve to provide inputs to the computer for producing the encoded video bitstreams or to receive the sequence of video images from a storage device or an imaging device.

The encoding system is coupled to the decoding system via a communication channel 550. The present invention is not limited to any particular type of communication channel.

The decoding system 505 comprises a general purpose computer 530 and various input/output device 540. The general purpose computer comprises a central processing unit (CPU) 532, a memory 534, an decoding system 536 for receiving and decoding a sequence of encoded images.

In the preferred embodiment, the decoding system 536 is simply the receiver system 400, as discussed above. The decoding system 536 can be physical devices that are coupled to the CPU 532 through communication channels. Alternatively, the decoding system 536 can be represented by a software application which is loaded from a storage device, e.g., a magnetic or optical disk, and resides in the memory 534 of the computer. As such, the decoding system 536 of the present invention can be stored on a computer readable medium.

The computer 530 can be coupled to a plurality of input and output devices 540, such as a keyboard, a mouse, a video monitor, or any number of devices for storing or distributing images, including but not limited to, a tape drive, a floppy drive, a hard disk drive or a compact disk drive. The input devices serve to allow the computer for storing and distributing the sequence of decoded video images.

Although various embodiments which incorporate the teachings of the present invention have been shown and described in detail herein, those skilled in the art can readily devise many other varied embodiments that still incorporate these teachings.

## Claims

1. A method for controlling program selection in a multiple program per channel transport stream, said method comprising the steps of:
(a) decoding at least one service announcement guide and a program allocation table (PAT) from the transport stream; and
(b) remapping said PAT into a user view table.

2. The method of claim 1, wherein said remapping step (b) remaps said PAT into said user view table in accordance with a viewer's selection.

3. The method of claim 1, wherein said remapping step (b) remaps said PAT into said user view table in accordance with viewing frequency of a viewer.

4. The method of claim 1, wherein said remapping step (b) remaps said PAT into said user view table in accordance with an emulation of cable channels.

5. The method of claim 1, wherein said remapping step (b) remaps said PAT into said user view table in accordance with designations from a broadcaster.

6. The method of claim 1, wherein said decoding step (a) decodes at least two partial service announcement guides and two PATs from two separate broadcasting sources, and wherein said remapping step (b) remaps said two PATs into said user view table.

7. The method of claim 1, wherein said user view table allows a viewer to select a program without changing a multiple program channel.

8. An apparatus (400) for controlling program selection in a multiple program per channel transport stream, said apparatus comprising:
a transport decoder (330) for extracting at least one service announcement guide and a program allocation table (PAT) from the transport stream; and
a controller (410), coupled to said transport decoder, for remapping said PAT into a user view table.

9. The apparatus (400) of claim 8, wherein said controller remaps said PAT into said user view table (450, 534, 540) in accordance with user selection.

10. A computer-readable medium (534, 540) having stored thereon a plurality of instructions, the plurality of instructions including instructions which, when executed by a processor, cause the processor to perform the steps comprising of:
(a) decoding at least one service announcement guide and a program allocation table (PAT) from the transport stream; and
(b) remapping said PAT into a user view table.
